(19) Europäisches Patentamt
European Patent Office
Office européen des brevets

(11) Veröffentlichungsnummer: **0 278 278 B1**

(12) # EUROPÄISCHE PATENTSCHRIFT

(45) Veröffentlichungstag der Patentschrift: **23.10.91**

(51) Int. Cl.5: **C14C 11/00**, C08G 18/08, C08G 18/66

(21) Anmeldenummer: **88100819.7**

(22) Anmeldetag: **21.01.88**

Die Akte enthält technische Angaben, die nach dem Eingang der Anmeldung eingereicht wurden und die nicht in dieser Patentschrift enthalten sind.

(54) **Beschichtungs- und Zurichtmittel für Leder.**

(30) Priorität: **29.01.87 DE 3702615**

(43) Veröffentlichungstag der Anmeldung:
**17.08.88 Patentblatt 88/33**

(45) Bekanntmachung des Hinweises auf die Patenterteilung:
**23.10.91 Patentblatt 91/43**

(84) Benannte Vertragsstaaten:
**AT BE CH DE ES FR GB GR IT LI LU NL SE**

(56) Entgegenhaltungen:
**EP-A- 0 164 547**
**DE-A- 3 437 918**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Höfer, Rainer, Dr.**
**Klever Strasse 31**
**W-4000 Düsseldorf 30(DE)**
Erfinder: **Friese, Hans-Herbert, Dr.**
**Schiesshecke 53**
**W-4019 Monheim(DE)**
Erfinder: **Grützmacher, Roland**
**Heinrich-Heine-Strasse 2**
**W-5603 Wülfrath(DE)**
Erfinder: **Kaindl, Gerhard**
**Rubensweg 9**
**W-4010 Hilden(DE)**

**EP 0 278 278 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Beschichtungs- und Zurichtmittel für Leder auf der Basis wäßriger Polyurethandispersionen, das Verfahren zum Aufbringen der erfindungsgemäßen Beschichtungs- und Zurichtmittel und ihre Verwendung bei der Beschichtung und Zurichtung von Leder und Lederaustauschstoffen.

Zur Zurichtung von Leder werden unterschiedliche filmbildende Polymere eingesetzt.

DE-OS 33 44 354 beschreibt die Verwendung von aus wäßriger Phase aufgetragenen Polyacrylaten. Für die Abschlußlackierung sind Nitrocellulosen und Acetobutyrate auch heute noch von Bedeutung und wegen ihres hohen Glanzes und ihrer hohen Echtheit geschätzt.

Mitte der 50iger Jahre fanden Polyurethansysteme ihren Eingang in die Lederindustrie. Ihre Bedeutung ist wegen der auf der besonderen Struktur der Polyurethane beruhenden Eigenschaften immer stärker gestiegen. Bis in die jüngste Zeit hinein wurden Polyurethane zur Behandlung von Leder und Lederaustauschstoffen aus organischer Lösung appliziert (EP-PS 73 389 und JP-PS 60 104 118). Es besteht jedoch aus ökonomischen und ökologischen Überlegungen heraus ein großes Interesse daran, auf den Einsatz von Lösungsmitteln ganz oder teilweise zu verzichten und sogenannte "all-water"-Systeme zu schaffen (P. Rothwell, Journal Society Leather Techniques and Chemistry 69, 105 (1984)).

DE-PS 31 39 966 betrifft ein Verfahren zur Herstellung von wäßrigen Dispersionen oder Lösungen von Polyurethanen, bei welchem man durch eingebaute ionische Gruppen und/oder eingebaute nichtionische hydrophile Gruppen, modifizierte und/oder externe Emulgatoren aufweisende Oligourethane mit endständigen Isocyanatgruppen in Wasser dispergiert und/oder löst, gleichzeitig oder anschließend in ein Aminogruppen aufweisendes Oligourethan überführt und mit di- oder polyfunktionellen Kettenverlängerungsmitteln die oligourethanketten verlängert. Verwendet werden die so erhaltenen Dispersionen oder Lösungen zur Herstellung von Überzügen und Beschichtungen auf beliebigen flexiblen und nichtflexiblen Substraten.

Die DE-PS 29 31 125 beschreibt ein Verfahren zur Herstellung eines mit Polyurethan imprägnierten faserigen porösen Bahnmaterials, insbesondere zur Herstellung eines Kunstleders durch Imprägnieren mindestens eines Teils des Bahnmaterials mit einer Dispersion eines Polyurethans, das keine freien Isocyanatgruppen enthält.

Die Herstellung wasserverdünnbarer Polyurethane durch die Umsetzung eines Amins oder Ammoniaks mit einem Polyurethan, das freie Carboxylgruppen enthält, beschreibt die US-PS 3 412 054. Derartige wasserverdünnbare Polyurethane können als Oberflächenbeschichtungsmittel und Druckfarben verwendet werden.

DE-PS 33 44 693 betrifft wäßrige Lösungen oder Dispersionen von Polyisocyanat-Polyadditionsprodukten, die chemisch eingebaute ternäre und quaternäre Ammoniumgruppen an eingebauten, innerhalb von end- und/oder seitenständig angeordneten Polyetherketten vorliegenden Ethylenoxideinheiten und über Urethangruppen eingebauten Polyestersegmenten aufweisen, die durch den Einbau von Dicarbonsäurepolyesterpolyolen eingeführt worden sind. Die genannten Polyurethandispersionen werden als Klebemittel oder zur Herstellung von Klebemitteln für beliebige Substrate, insbesondere Gummi, verwendet.

In der DE-OS 34 17 265 werden wässerige Beschichtungs-und Finishmittel für (vorzugsweise PVC-)Flächengebilde auf der Basis von Polyurethandispersionen beschrieben, wobei der Polyurethanfeststoff aus einem Polyesterpolyol, niedermolekularen Diolen und gegebenenfalls Triolen, anionische Gruppen tragenden und/oder nichtionische Polyoxyethylensegmente aufweisenden Verbindungen, wenigstens zwei verschiedenen Diisocyanaten und einem Polyamin als Kettenverlängerer besteht.

Als Reaktionsmittel für die Herstellung von Polyurethandispersionen sind im Stand der Technik Polyetherpolyole, Polyesterpolyole und Polyetherpolyesterpolyole vorgeschlagen worden. Derartige Polyole werden auf synthetischem Wege aus Erdöl hergestellt, lassen sich also nicht von nachwachsenden, erneuerbaren und aus natürlichen Quellen regenerierbaren Rohstoffen ableiten. Aufgrund der zunehmend knapper werdenden Erdölresourcen bestand somit Bedarf, Reaktionsmittel für die Herstellung von Polyurethandispersionen zu verwenden oder mitzuverwenden, die aus natürlichen Quellen stammen und sich somit sukzessive regenerieren lassen.

Der vorliegenden Erfindung liegt somit die Aufgabe zugrunde, neue Beschichtungs- und Zurichmittel für Leder auf der Basis wäßriger Polyurethandispersionen mit einem Feststoffgehalt von 10 bis 50 % und einer Viskosität im Bereich von 10 bis 50 000 mPa.s zur Verfügung zu stellen.

Eine weitere Aufgabe der vorliegenden Erfindung besteht darin, neue Zusammenstellungen von Polyolkomponenten zur Verwendung in der Herstellung wäßriger Polyurethandispersionen zur Verfügung zu stellen, die bewirken, daß die Eigenschaften der mit den Polyurethandispersionen beschichteten und zugerichteten Leder oder Lederaustauschstoffe allen Anforderungen hinsichtlich Strapazierfähigkeit, insbesondere geringer Sprödigkeit und hoher Naß- und Trockenreibfestigkeit, Geschlossenheit und Glanz

genügen.

Eine weitere Aufgabe der vorliegenden Erfindung besteht darin, Beschichtungs- und Zurichtmittel für Leder und Lederaustauschstoffe zur Verfügung zu stellen, die einen Polyurethanfeststoff enthalten, der überwiegend oder ganz in wäßriger Phase dispergiert vorliegt und diesen aus der wäßrigen Phase auf das zu beschichtende oder zuzurichtende Material aufzutragen.

Weiterhin ist Aufgaabe der vorliegenden Erfindung, besonders hohe Echtheitswerte zu erreichen ohne Einsatz technisch aufwendiger und in der Leder-Industrie wenig gebräuchlicher Bestrahlungseinrichtungen zur UV-Vernetzung, wie in DE-OS 34 37 918 gefondert und insbesondere ohne Verwendung der toxikologisch bedenklichen Aziridine zur Vernetzung. Hohe Echtheitswerte machen die Beschichtungs- und Zurichtmittel, beispielsweise in der Grundierung, insbesondere aber als Schlußstrich geeignet. Das collagene Faserflechtwerk der Lederhaut ist sowohl hinsichtlich der Art der Verflechtung als auch hinsichtlich des Aufbaus der Einzelfasern von jedem anderen Flechtwerk verschieden. Während bei jedem anderen Gewebe eine gewisse Regelmäßigkeit der Verflechtung erkennbar ist, freie Faserenden festgestellt und Einzelfasern isoliert werden können, sind die collagenen Bindegewebsfasern kreuz und quer nach allen Richtungen und Dimensionen so miteinander verflochten und ineinander verwachsen, daß niemals ein Anfang oder Ende von Fasern festgestellt werden kann und immer nur Bruchstücke von Fasern unter Verletzung dieser isoliert werden können (Fritz Stather, Gerbereichemie und Gerbereitechnologie, Akademieverlag, Berlin, 1967, Seite 24). Zudem besitzt Leder auf nahezu allen Verwendungsgebieten höhere Festigkeit als alle verschiedenartigen Austauschmaterialien. Das gilt insbesondere für Zugfestigkeit, Stichausreiß- und Weiterreißfestigkeit (Fritz Stather, loc. cit., Seite 728).

Überraschend wurde nun gefunden, daß Polyurethandispersionen mit deutlich besseren Eigenschaften erhalten werden können, die besonders für das komplexe Substrat Leder geeignet sind, wenn man als Reaktionsmittel bei der Herstellung von Polyurethandispersionen Triole und Polyole, die sich von natürlich nachwachsenden Triglyceriden ableiten, zur Herstellung von Beschichtungs- und Zurichtmitteln verwendet.

Gegenstand der vorliegenden Erfindung sind somit Beschichtungs- und Zurichtmittel für Leder auf der Basis wäßriger Polyurethandispersionen mit einem Feststoffgehalt von 10 bis 50 % und einer Viskosität im Bereich von 10 bis 50 000 mPa.s, dadurch gekennzeichnet, daß die Polyurethandispersion besteht aus

(a) 40 bis 200 Gew.-Teilen, bezogen auf 100 Gew.-Teile Isocyanatkomponente, eines Polyesterpolyols,

(b) 6 bis 60 Gew.-Teilen, bezogen auf 100 Gew.-Teile Isocyanatkomponente, eines Triols oder Polyols mit wenigstens 10 C-Atomen, hergestellt durch Addition einwertiger Alkohole mit 1 bis 8 C-Atomen an epoxidierte Triglyceridöle, wobei die Additionsprodukte mit Alkylenoxiden mit 2 bis 4 C-Atomen zur Reaktion gebracht werden können, oder eines Rizinusöls, alkoxyliert mit 0 bis 50 Ethylenoxid- und/oder 0 bis 100 Propylenoxidgruppen,

(c) 0 bis 12 Gew-.Teilen, bezogen auf 100 Gew.-Teile Isocanatkomponente, eines Polyetherpolyols,

(d) 5 bis 35 Gew.-Teilen, bezogen auf 100 Gew.-Teile Isocyanatkomponente, ionische Gruppen tragenden Dihydroxy- und/oder Diaminoverbindungen und

(e) 100 Gew.-Teilen eines organischen Diisocyanats oder einer Mischung organischer Diisocyanate.

Die Viskosität der erfindungsgemäßen Beschichtungs- und Zurichtmittel für Leder auf der Basis wäßriger Polyurethandispersionen liegt üblicherweise im Bereich von 10 bis 50 000 mPa.s. Gemäß einer bevorzugten Ausführungsform werden Beschichtungs- und Zurichtmittel für Leder auf der Basis wäßriger Polyurethandispersionen mit einer Viskosität im Bereich von 10 bis 5 000 mPa.s zur Verfügung gestellt.

Polyesterpolyole im Sinne der vorliegenden Erfindung sind üblicherweise aufgebaut aus aliphatischen und/oder aromatischen Dicarbonsäuren sowie Diolen. Aliphatische Dicarbonsäuren im Sinne der Erfindung sind z. B. Bernsteinsäure, Adipinsäure, Korksäure, Azelainsäure, Sebazinsäure, Brassylsäure oder Dimerfettsäuren. Aromatische Dicarbonsäuren sind Phthalsäure, Isophthalsäure, Terephthalatsäure, Tetrahydrophthalsäure. Als bevorzugte aromatische Dicarbonsäure wird Isophthalsäure und als bevorzugte aliphatische Dicarbonsäure Adipinsäure verwendet. Diole im Sinne der Erfindung sind Ethylenglykol, Propandiol-1.2, Propandiol-1.3, Diethylenglykol, Butandiol-1.4, Hexandiol-1.6, Decandiol-1.10, Dimerocenol (Sovermol(R) 650 NS, Henkel KGaA), Neopentylglykol oder verschiedene isomere Bishydroxymethylcyclohexane. Die genannten Dicarbonsäuren werden üblicherweise mit Diolen verestert. Ein bevorzugtes Polyesterpolyol entsteht durch Veresterung von Isophthalsäure und/oder Adipinsäure mit Diethylenglykol. Gemäß einer bevorzugten Ausführungsform der vorliegenden Erfindung weisen die Polyesterpolyole eine Hydroxylzahl von weniger als 200 auf. Insbesondere bevorzugt sind Polyesterpolyole, deren Hydroxylzahl des Polyesters 30 bis 100 beträgt. Gemäß einer Ausführungsform der vorliegenden Erfindung weisen die Polyesterpolyole eine Säurezahl von weniger als 12 und bevorzugt eine Säurezahl von weniger als 6 auf. Insbesondere bevorzugt sind Polyesterpolyole, die aufgebaut sind aus Adipinsäure und/oder Isophthalsäure und Diethylenglykol, wobei die Hydroxylzahl der Polyesterpolyole kleiner als 200 und vorzugsweise 30 bis 100 ist und die Säurezahl des Esters kleiner als 12 und vorzugsweise kleiner als 6 ist.

Triole und Polyole mit wenigstens 10 C-Atomen werden hergestellt durch die Addition einwertiger Alkohole mit 1 bis 8 C-Atomen an epoxidierte Triglyceridöle, wobei die gegebenenfalls gereinigten Additionsprodukte mit Alkylenoxiden mit 2 bis 4 C-Atomen zur Reaktion gebracht werden können. Eine weitere Ausführungsform der vorliegenden Erfindung beschreibt Beschichtungs- und Zurichtmittel, die ein mit 0 bis 50 Ethylenoxid- und/oder 0 bis 100 Propylenoxidmolekülen alkoxyliertes Rizinusöl enthalten. Bevorzugte Beschichtungs- und Zurichtmittel enthalten Ringöffnungsprodukte eines Soja- oder Leinölepoxids mit Methanol, alkoxyliert mit 0 bis 10 Ethylenoxid- und/oder 0 bis 20 Propylenoxidgruppen pro Mol Ringöffnungsprodukt oder Rizinusöl, alkoxyliert mit 0 bis 10 Ethylenoxid- und/oder 0 bis 20 Propylenoxidmolekülen pro Mol Rizinusöl.

Erfindungsgemäße Beschichtungs- und Zurichtmittel für Leder auf der Basis wäßriger Polyurethandispersionen können gegebenenfalls bis zu 12 Gew.-Teile, bezogen auf 100 Gew.-Teile Isocyanatkomponente, an Polyetherpolyolen enthalten. Für Beschichtungs- und Zurichtmittel für Leder wird vorzugsweise ein Polyetherpolyol verwendet, das der Formel (I)

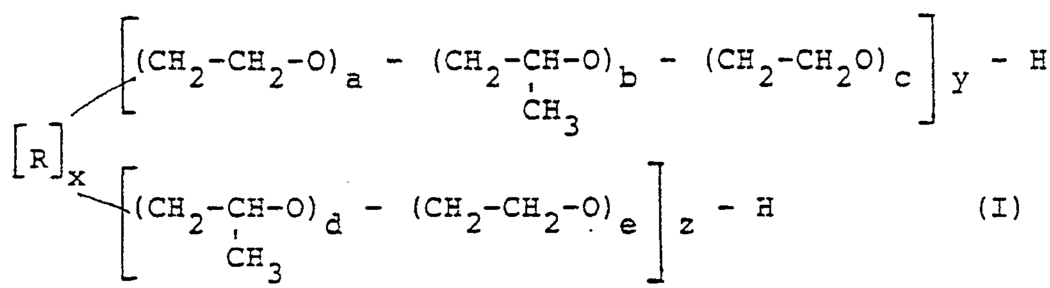

(I)

entspricht, in der

R für einen Glycerin-, Trimethylolpropan-, Trimethylolethan- oder Polyglycerinrest mit dem Polymerisationsgrad x = 1 bis 6 steht und die Indices y = (x - z + 2), z = 0 bis 4, a = 1 bis 15, b = 20 bis 100, c = 1 bis 15, d = 20 bis 150 und e = 1 bis 15 bedeuten mit der Maßgabe, daß die Summen (a + c + e) = 3 bis 40, (b + d) = 40 bis 300 und (c + e) = 1 bis 15 bedeuten und y mindestens den Wert 1 besitzt.

Bevorzugt sind solche Blockpolymeren, in denen die Indices y mindestens = 2, a = 1 bis 5, b bzw. d = 30 biz 100 und c bzw. e = 1 bis 5 bedeuten und die Summe (a + c + e) = 3 bis 15 beträgt. Weiterhin sind solche Blockpolymeren besonders bevorzugt, in denen R für einen Glycerinrest oder einen Trimethylolpropanrest steht, d.h. in denen x = 1 bedeutet. Steht R für einen Glycerinrest, so ist ein Glycerin besonders bevorzugt, das durch Spaltung der Umesterung aus natürlichen Triglyceriden gewonnen wurde. In diesen, vom Glycerin oder Trimethylolpropan abgeleiteten Blockpolymeren sind im allgemeinen 2 bis 3 Hydroxylgruppen mit Ethylenglykolethergruppen substituiert, d.h. y steht für 2 oder 3 und z für 0 oder 1. Entsprechende Polyetherpolyole weisen eine Hydroxyzahl im Bereich von 25 bis 40 auf. Polyetherpolyole mit R = Glycerin oder Trimethylolpropan im Sinne der vorliegenden Erfindung besitzen üblicherweise Molekulargewichte im Bereich von 1 000 bis 20 000 und vorzugsweise im Bereich von 3 000 bis 12 000.

Chemisch fixierte hydrophile Gruppen aufweisende, vorzugsweise im Sinne der Isocyanat-Additionsreaktionen mono- und insbesondere difunktionelle Hydroxy- oder Aminoverbindungen sind bekannt, die Carboxylat-, Sulfonat- und/oder Ammoniumgruppen enthalten. Beschichtungs- und Zurichtmittel für Leder enthalten gemäß einer Ausführungsform der vorliegenden Erfindung ionische Gruppen tragende Dihydroxy- oder Diaminoverbindungen, die eine Carboxylat-, Sulfonat- und/oder Ammoniumgruppe enthalten. Als bevorzugte, ionische Gruppen tragende Dihydroxyverbindung wird vorteilhafterweise Dimethylolpropionsäure verwendet.

Als Diisocyanate werden üblicherweise aliphatische oder aromatische Diisocyanate verwendet, wobei deren Auswahl sehr stark von der späteren Verwendungsweise der wäßrigen Polyurethandispersion abhängt; sollen die resultiertenden Polurethane lichtstabil sein und nicht zu Verfärbungen, beispielsweise nach gelb, neigen, so sind aliphatische Diisocyanate zu verwenden; kommt es auf Lichtstabilität nicht an, beispielsweise weil diese Eigenschaft in der Verwendung der resultierenden Polyurethane eine untergeordnete Rolle spielt, so können sowohl aliphatische als auch aromatische Diisocyanate verwendet werden. Da für Beschichtungs- und Zurichtmittel für Leder insbesondere Farbechtheit eine Grundvoraussetzung darstellt, werden diese aus organischen aliphatischen Diisocyanaten hergestellt. Aliphatische Diisocyanate stammen üblicherweise aus der Gruppe Isophorondiisocyanat, 4.4-Methylen-bis-(cyclohexylisocyanat),

Tetramethylen-1.4-diisocyanat, Hexamethylen-1.6-diisocyanat, Cyclohexan-1.4-diisocyanat, Trimethyl-hexamethylendiisocyanat und Dicyclohexylmethandiisocyanat.

Bevorzugt im Sinne der vorliegenden Erfindung sind Beschichtungs- und Zurichtmittel für Leder, dadurch gekennzeichnet, daß das organische Diisocyanat ausgewählt ist aus der aus Isophorondiisocyanat, 4.4-Methylen-bis-(cyclohexylisocyanat),Hexamethylen-1.6-diisocyanat und Dimerfettsäurediisocyanat bestehenden Gruppe. Insbesondere bevorzugt ist Isophorondiisocyanat.

Ein weiterer Gegenstand der vorliegenden Erfindung besteht in dem Verfahren zum Aufbringen von Beschichtungs-und Zurichtmitteln für Leder, das dadurch gekennzeichnet ist, daß man die Polyurethandispersionen gegebenenfalls in wäßriger Verdünnung mittels Walzenauftrags-, Spritz-, Plüsch- oder Gießmaschinen auf das Leder aufbringt und anschließend gemäß dem Stand der Technik trocknet und gut bügelt.

Zur Verbesserung der Eigenschaften der Polyurethandispersionen können diese zur Verwendung als Beschichtungs- und Zurichmittel weitere in der Technik bekannte Zusätze enthalten. Demgemäß ist Gegenstand der vorliegenden Erfindung auch ein Verfahren zum Aufbringen von Beschichtungs- und Zurichtmitteln, das dadurch gekennzeichnet ist, daß man die Polyurethandispersion in an sich bekannter Weise mit Zusätzen wie Polyacrylaten, kolloidalem Kasein, modifizierten Silikonen mit wäßrigen Emulsionen natürlicher oder synthetischer Wachse bzw. Wachsester, Antischaummitteln und Pigmentzubereitungen abmischt. Gegebenenfalls ist eine Abmischung mit wasserverdünnbarem Celluloseester, bzw. mit weiteren PUR-Emulsionen möglich.

Weiterer Gegenstand der vorliegenden Erfindung ist die Verwendung von Beschichtungs- und Zurichtmitteln für Leder zum Aufbringen von Schlußstrichen und zum Zurichten von Leder und Flächengebilden auf der Basis von Lederaustauschstoffen.

Der vorteil der Beschichtungs- und Zurichtmittel für Leder entsprechend der vorliegenden Erfindung besteht insbesondere darin, daß besonders hohe Echtheitswerte erreicht werden, ohne beispielsweise toxikologisch bedenkliche Aziridine oder technisch aufwendige Bestrahlungseinrichtungen zur Vernetzung zu benutzen. Daher sind die Beschichtungs- und Zurichtmittel für Leder und Lederaustauschstoffe auf der Basis wäßriger Polyurethandispersionen für viele Anwendungen in der Lederzurichtung, beispielsweise in der Grundierung, insbesondere aber als Schlußstrich (Top-Coat) geeignet. Die vorteilhafte Verwendung der erfindungsgemäßen Beschichtungs- und Zurichtmittel zeigt sich insbesondere bei der Naßreibechtheit der beschichteten Leder. Vergleichbare Werte konnten bisher nur durch Lacke, insbesondere lösemittelverdünnbare Lacke oder durch Vernetzung von wäßrigen Polymerdispersionen wie Polyacrylat- und Polyurethandispersionen, mit Polyaziridinen erbracht werden.

Entgegen der Lehre des Standes der Technik, beispielsweise der DE-OS 34 17 265, Seite 11, wurde überraschend gefunden, daß mehrfunktionelle Hydroxylverbindungen mit Vorteil für bevorzugte Ausführungsformen in Polyurethandispersionen zur Beschichtung von Oberflächen verwendet werden können. Während die DE-OS 34 17 265 vorschlägt, trifunktionelle Hydroxylverbindungen zu den weniger bevorzugten Ausführungsformen zu rechnen, da bei der Verwendung trifunktioneller Aufbaukomponenten die Gefahr bestünde, daß teilweise unlösliche Anteile entstehen, die eine Weiterverarbeitung zu gebrauchsfähigen Polyurethandispersionen nahezu unmöglich macht, lehrt die vorliegende Erfindung das Gegenteil, nämlich insbesondere die Verwendung von mehrfunktionellen Polyhydroxyverbindungen, gegebenenfalls in Kombination mit mehrfunktionellen Blockpolymeren auf der Basis von Glycerin und/oder Trimethylolpropan.

Überraschend ist, daß durch die Verwendung der hydrophoben, sich von Triglyceriden ableidenden Triole und Polyole, die gegenüber dem Stand der Technik eine hydrophobere Komponente darstellen, keine Verlaufmittel zur Beschichtung von Oberflächen notwendig sind. Aufgrund des stark hydrophoben Charakters der Triole und Polyole wäre anzunehmen gewesen, daß Beschichtungs-und Zurichtmittel für Leder auf der Basis wäßriger Polyurethandispersionen entsprechend der vorliegenden Erfindung insbesondere Verlaufmittel wie beispielsweise alkoxylierte Dimethylpolysiloxane und/oder wasserlösliche Polyethylenoxid-Einheiten enthaltende Mittel essentiell bedingen würden. Überraschend wurde gefunden, daß bei der Verwendung von Triolen und Polyolen gemäß der vorliegenden Erfindung auf die genannten Verlaufmittel verzichtet werden konnte, was einen bedeutsamen Vorteil der vorliegenden Erfindung gegenüber dem Stand der Technik darstellt.

Zur Herstellung der für die erfindungsgemäßen Zwecke geeigneten Polyurethandispersionen werden die Polyole und ein Überschuß an Diisocyanat unter Bildung eines Polymers mit endständigen Isocyanatgruppen umgesetzt. Obwohl geeignete Reaktionsbedingungen und Reaktionszeiten sowie Temperaturen, je nach dem betreffenden Isocyanatpolyol, variiert werden können, sind diese Änderungen für den Fachmann selbstverständlich. Der Fachmann weiß, daß die Reaktionsfähigkeit der umzusetzenden Bestandteile ein entsprechendes Gleichgewicht zwischen Reaktionsgeschwindigkeit und unerwünschten Nebenreaktionen, die zu einer Verfärbung und Molekulargewichtsverringerung führen, notwendig macht. Typischerweise wird die Reaktion unter Rühren bei etwa 50 bis etwa 120 °C innerhalb von ungefähr 1 bis 4 h durchgeführt.

Allgemeine Herstellungsvorschrift

Um seitlich Carboxylgruppen einzuführen, wird das Polymere mit endständigen Isocyanatgruppen mit einem molaren Überschuß an Dihydroxy- und/oder Diaminoverbindung 1 bis 4 h bei 50 bis 120 °C umgesetzt, um ein Prepolymer mit endständigen Isocyanatgruppen zu erhalten. Die Säure wird vorzugsweise in Form einer Lösung, z.B. in N-Methyl-1.2-pyrrolidon oder N,N-Dimethylformamid, zuggegeben. Das Lösungsmittel für die Säuren macht typischerweise nicht mehr als ungefähr 5 % der Gesamtmenge aus, um den Anteil an organischem Lösungsmittel in dem Polyurethangemisch möglichst gering zu halten. Nachdem die Polyolkomponente der Dihydroxy-und/oder Diaminoverbindungen mit dem Polymeren umgesetzt ist, werden die seitlichen Carboxylgruppen bei ungefähr 58 bis 75 °C ungefähr 20 min neutralisiert. Eine Kettenverlängerung und Bildung der Dispersion wird erreicht durch Zugabe von Wasser und Rühren. Ein wasserlösliches Diamin, beispielsweise Ethylendiamin, Hexamethylendiamin, Hydrazin, kann gegebenenfalls als zusätzlicher Kettenverlängerer zu dem Wasser zugegeben werden. Die Kettenverlängerung umfaßt die Umsetzung der verbleibenden Isocyanatgruppen mit Wasser unter Bildung von Harnstoffgruppen und weitere Polymerisation des polymeren Materials, wobei alle Isocyanatgruppen durch Zugabe eines großen stöchiometrischen Überschusses an Wasser umgestzt werden. Es ist festzustellen, daß die erfindungsgemäßen Polyurethane stark plastisch sind, d.h., daß sie nach ihrer Bildung außer durch Zugabe zusätzlicher Härtungsmittel nicht stark weiterhärten.

Es wird ausreichend Wasser angewandt, um das Polyurethan in einer Konzentration von ungefähr 10 bis 50 Gew.-% an Feststoffen zu dispergieren und eine Viskosität der Dispersion im Bereich von 10 bis 50 000 mPa.s, vorzugsweise 10 bis 5 000 mPa.s, zu erreichen.

Die so hergestellten Polyurethandispersionen können alleine eingesetzt werden, können aber auch mit bekannten Zusätzen wie wäßrigen Polyacrylaten, kolloidalen Kaseinen als Co-Bindemittel, modifizierten Silikonen zur Griffverbesserung, mit wäßrigen Emulsionen natürlicher und synthetischer Wachse bzw. Wachsester zur Steuerung der Wasserfestigkeit, der Gleiteigenschaften und des Blockverhaltens sowie mit weiteren in der Lederzurichtung üblichen Zuschlagstoffen, wie Antischaummitteln, Verlaufhilfsmitteln, Mattierungsmitteln und Pigmentzubereitungen abgemischt werden.

Die Eignung wird an den folgenden Beispielen erläutert:

Herstellung des Polyurethans für die erfindungsgemäßen Polyurethandispersionen

Das Herstellungsverfahren besteht darin, daß ein stöchiometrischer Überschuß eines Diisocyanats oder einer Mischung von Diisocyanaten mit den Polyolen, d.h. den Polyesterpolyolen, den Triolen oder Polyolen, die sich von Triglyceriden ableiten, den Polyetherpolyolen und den ionische Gruppen tragenden Dihydroxy- und/oder Diaminoverbindungen im Rahmen der angegebenen Gewichtsverhältnisse zu einem Zwischenprodukt mit endständigen Isocyanatgruppen umgesetzt wird. Eine bevorzugte Ausführungsform des Verfahrens besteht darin, daß zunächst erst die Polyesterpolyole und die Triole oder Polyole, die sich von Triglyceriden ableiten, oder die Polyesterpolyole, die Triole oder Polyole, die sich von Triglyceriden ableiten, und die Polyetherpolyole mit Isocyanat zu einem Prepolymer mit endständigen Isocyanatgruppen umgesetzt werden und dann dieses Prepolymer mit den reaktionsfähigen Wasserstoffatomen der löslichkeitsvermittelnden Verbindungen der ionische Gruppen tragenden Dihydroxy- und/oder Diaminoverbindungen reagiert, um löslichkeitsvermittelnde ionische Gruppen einzuführen. Die löslichkeitsvermittelnden Dihydroxy- und/oder Diaminoverbindungen können in Form ihrer Salze und/oder in Form ihrer Säuren zugesetzt werden. Sie können zudem im Verlauf oder nach der Urethanbildung neutralisiert werden. Eine Ausführungsform des erfindungsgemäßen Verfahrens besteht darin, daß das Polyetherpolyol erst nach oder bei der Überführung in eine wäßrige Dispersion ganz oder teilweise zugefügt wird.

Beispiel 1
GT = Gewichtsteile

Geprüfte Polyole:

| | |
|---|---|
| Polyol I: | Polyesterpolyol, aufgebaut aus Isophthalsäure, Adipinsäure und Diethylenglykol,<br>OH-Zahl (OHZ) 60,<br>Säurezahl = 2 |
| Polyol IIa: | Ringöffnungsprodukt eines Leinölepoxids mit Methanol,<br>umgesetzt mit 3 Mol Propylenoxid |
| Polyol IIb: | Ringöffnungsprodukt eines Sojaölepoxids mit Methanol, |

| | |
|---|---|
| | OHZ 225 |
| Polyol IIIa: | Polyetherpolyol im Sinne der Erfindung auf Basis Trimethylolpropan, OHZ 39 |
| Polyol IIIb: | Polyetherpolyol im Sinne der Erfindung auf Basis eines natürlichen Glycerins, OHZ 29 |
| Polyol IV: | Dimethylolpropionsäure |

| Beispiel | I | | II | |
|---|---|---|---|---|
| Komponente | GT | % | GT | % |
| A Polyol I | 168,70 | 20,21 | 168,62 | 20,10 |
| B Polyol IIa | 28,55 | 3,42 | 28,44 | 3,39 |
| C Polyol IIIa | - | - | 4,19 | 0,50 |
| D Polyol IV | 27,05 | 3,24 | 27,10 | 3,23 |
| E N-Methylpyrrolidon | 40,48 | 4,85 | 40,52 | 4,83 |
| F Hexamethylen-diisocyanat | 100,00 | 11,98 | 100,00 | 11,92 |
| G N-Methylmorpholin | 22,29 | 2,67 | 22,32 | 2,66 |
| H Wasser | | 53,63 | | 53,36 |

| Beispiel | III | | IV | |
|---|---|---|---|---|
| Komponente | GT | % | GT | % |
| A Polyol I | 164,50 | 18,70 | 168,72 | 19,42 |
| B Polyol IIa | 26,82 | 3,05 | 28,58 | 3,29 |
| C Polyol IIIa | 7,83 | 0,89 | 2,95 | 0,34 |
| D Polyol IV | 27,09 | 3,08 | 27,02 | 3,11 |
| E N-Methylpyrrolidon | 40,46 | 4,60 | 40,57 | 4,67 |
| F Hexamethylen-diisocyanat | 100,00 | 11,37 | 100,00 | 11,51 |
| G N-Methylmorpholin | 22,81 | 2,48 | 24,50 | 2,82 |
| H Wasser | | 55,82 | | 54,83 |

| Beispiel | V | | VI | |
|---|---|---|---|---|
| Komponente | GT | % | GT | % |
| A Polyol I | 127,69 | 19,46 | 127,62 | 19,36 |
| I Polyol IIb | 21,59 | 3,29 | 21,56 | 3,27 |
| K Polyol IIIb | - | - | 3,16 | 0,48 |
| D Polyol IV | 20,47 | 3,12 | 20,50 | 3,11 |
| E N-Methylpyrrolidon | 30,64 | 4,67 | 30,65 | 4,65 |
| L Isophorondi-isocyanat | 100,00 | 15,24 | 100,00 | 15,17 |
| G N-Methylmorpholin | 16,86 | 2,57 | 16,88 | 2,56 |
| H Wasser | | 51,64 | | 51,39 |

| Beispiel | VII | | VIII | |
|---|---|---|---|---|
| Komponente | GT | % | GT | % |
| A Polyol I | 124,41 | 18,04 | 127,68 | 18,73 |
| I Poylol IIb | 20,28 | 2,94 | 21,61 | 3,17 |
| K Polyol IIIb | 5,93 | 0,86 | 2,25 | 0,33 |
| D Polyol IV | 20,48 | 2,97 | 20,45 | 3,00 |
| E N-Methylpyrrolidon | 30,62 | 4,44 | 30,67 | 4,50 |
| L Isophorondi-isocyanat | 100,00 | 14,50 | 100,00 | 14,67 |
| M Dimerfettsäure-diisocyanat | - | - | - | - |
| G N-Methylmorpholin | 16,48 | 2,39 | 18,54 | 2,72 |
| H Wasser | | 53,85 | | 52,87 |

| Beispiel | IX | |
|---|---|---|
| Komponente | GT | % |
| A Polyol I | 159,52 | 17,85 |
| I Poylol IIb | 26,99 | 3,02 |
| K Polyol IIIb | 2,77 | 0,31 |
| D Polyol IV | 25,56 | 2,86 |
| E N-Methylpyrrolidon | 38,45 | 4,30 |
| L Isophorondi-isocyanat | 100,00 | 11,19 |
| M Dimerfettsäure-diisocyanat | 69,97 | 7,83 |
| G N-Methylmorpholin | 23,06 | 2,58 |
| H Wasser | | 50,06 |

Anwendungsbeispiele

Gew.-Verhältnis = Gewichtsverhältnis
NC-Emulsion = Nitrocellulose-Emulsion

BEISPIEL 1

Zurichtung von Möbelleder-Crust

| Grundierung: | Flottenzusammensetzung (Gew.-Teile) |
|---|---|
| wäßrige Pigmentpräparation | 100 |
| Polyacrylat-Dispersion | 150 |
| Polyurethan-Dispersion | 150 |
| Polyurethan-Dispersion nach Beispiel VIII | 50 |
| Wachsdispersion | 60 |
| Wäßrige Mattierungsmittel | 20 |
| Wasser | 350 |

Flotte 3 - 4 x spritzen

Abschluß:

| | |
|---|---|
| Kombination Polyurethan; Dispersion (nach Beispiel VIII mit Polyacrylat 20/30 Gew.-Verhältnis) | 200 |
| NC-Emulsion | 100 |
| Mattierungsmittel | 100 |
| Wasser | 200 |

Flotte 2 x spritzen, Leder millen, Flotte 1 x spritzen

Griffluster:

| | |
|---|---|
| Mattierungsmittel | 50 |
| Wachs- und Silikon-Dispersion | 115 |
| Wasser | 200 |

Mit dieser lösungsmittelarmen Zurichtung werden die für Möbellederzurichtungen geforderten physikalischen Echtheiten erreicht.

Reibechtheit nach Veslie (DIN 53339/IUF 450

| | | | |
|---|---|---|---|
| trockener Filz | 1000 | Reibungen | keine Beschädigung |
| nasser Filz | 300 | Reibungen | keine Beschädigung |

Dauerbiegeverhalten im Bally-Flexometer (DIN 53351/IUP 20)

| | | | |
|---|---|---|---|
| trocken | 100 000 | Knickungen | keine Beschädigung |
| naß | 20 000 | Knickungen | keine Beschädigung |

BEISPIEL 2

Zurichtung von Schuhoberleder (Softy)

| Grundierung: | Flottenzusammensetzung (Gew.-Teile) |
|---|---|
| Pigmentierte NC-Emulsion | 150 |
| NC-Emulsion (farblos) | 50 |
| PUR-Dispersion, feinteilig, sehr weich | 5 |
| Kationische PUR-Dispersion | 20 |
| Wasser | 150 |

Flotte 2 x spritzen, Leder Finiflex bügeln bei 100 °C, Flotte 2 x spritzen

Abschluß:

| | |
|---|---|
| Kombination PUR-Dispersion nach Beispiel V/Polyacrylat-Dispersion 70/30 Gew.-Verhältnis | 100 |
| Griffmittel auf Wachsbasis | 10 |
| Wasser | 100 |

Flotte 2 x spritzen, Leder millen und finiflex bügeln 100 °C

Es wurden die für Schuhoberleder erforderlichen Echtheiten erreicht.

Reibechtheit nach Veslie (DIN 53339/IUF 450)

| | | |
|---|---|---|
| trockener Filz | 150 Reibungen | keine Beschädigung |
| nasser Filz | 100 Reibungen | keine Beschädigung |

Dauerbiegeverhalten im Bally Flexometer (DIN 53351/IUP 20)

| | | |
|---|---|---|
| trocken | 50 000 Knickungen | keine Beschädigung |
| naß | 20 000 Knickungen | keine Beschädigung |

BEISPIEL 3

Schuhoberleder

| Grundierung: | Flottenzusammensetzung (Gew.-Teile) |
|---|---|
| Wäßrige Pigmentpräparation | 100 |
| Polyacrylat-Dispersion | 300 |
| Mattierungsmittel | 20 |
| Wachsdispersion | 30 |
| Wasser | 400 |

Flotte 2 x spritzen, Leder poren, Flotte 2 x spritzen

Abschluß:

| | |
|---|---|
| PUR-Dispersion nach Beispiel VI | 70 |
| Polyacrylat-Dispersion | 30 |
| Griffmittel auf Wachsbasis | 5 |
| Wasser | 100 |

Flotte 2 x spritzen

Mit dieser Zurichtung werden ohne Verwendung von Lösungsmitteln die für Schuhoberleder erforderlichen physikalischen Echtheiten erreicht.

Reibechtheit nach Veslie (DIN 53339/IUF 450)

| | | | |
|---|---|---|---|
| trockener | Filz | 150 Reibungen | keine Beschädigung |
| nasser | Filz | 100 Reibungen | keine Beschädigung |

Dauerbiegeverhalten im
Bally Flexometer
(DIN 53351/IUP 20)

| | | |
|---|---|---|
| trocken | 50 000 Knickungen | keine Beschädigung |
| naß | 20 000 Knickungen | keine Beschädigung |

BEISPIEL 4

Rindbekleidungsleder

| Grundierung: | Flottenzusammensetzung (Gew.-Teile) |
|---|---|
| Wäßrige Pigmentpräparation | 40 |
| Polyacrylat-Dispersion | 200 |
| Mattierungsmittel | 25 |
| Wasser | 450 |

Flotte 3 - 4 x spritzen

Abschluß:

| | |
|---|---|
| Polyurethan-Dispersion nach Beispiel IX | 100 |
| Mattierungsmittel | 50 |
| Wasser | 150 |

Flotte 2 x spritzen, Leder millen, evt. Grifflüster spritzen

Mit dieser Zurichtung werden ohne Verwendung von Lösungsmitteln die für Bekleidungsleder erforderlichen Echtheiten erreicht.

**Reibechtheit nach Veslie (DIN 53339/IUF 450)**

| | | | |
|---|---|---|---|
| trockener | Filz | 100 Reibungen | keine Beschädigung |
| nasser | Filz | 50 Reibungen | keine Beschädigung |

**Dauerbiegeverhalten im Bally Flexometer (DIN 53351/IUP 20)**

| | | |
|---|---|---|
| trocken | 100 000 Knickungen | keine Beschädigung |
| naß | 50 000 Knickungen | keine Beschädigung |

## Patentansprüche

1. Beschichtungs- und Zurichtmittel für Leder auf der Basis wäßriger Polyurethandispersionen mit einem Feststoffgehalt von 10 bis 50 % und einer Viskosität im Bereich von 10 bis 50 000 mPa.s, dadurch gekennzeichnet, daß die Polyurethandispersion besteht aus
   (a) 40 bis 200 Gew.-Teilen, bezogen auf 100 Gew.-Teile Isocyanatkomponente, eines Polyesterpolyols,
   (b) 6 bis 60 Gew.-Teilen, bezogen auf 100 Gew.-Teile Isocyanatkomponente, eines Triols oder Polyols mit wenigstens 10 C-Atomen, hergestellt durch die Addition einwertiger Alkohole mit 1 bis 8 C-Atomen an epoxidierte Triglyceridöle, wobei die Additionsprodukte mit Alkylenoxiden mit 2 bis 4 C-Atomen zur Reaktion gebracht werden können, oder eines Rizinusöls, alkoxyliert mit 0 bis 50 Ethylenoxid-und/oder 0 bis 100 Propylenoxidgruppen,
   (c) 0 bis 12 Gew-.Teilen, bezogen auf 100 Gew.-Teile Isocyanatkomponente, eines Polyetherpolyols,
   (d) 5 bis 35 Gew.-Teilen, bezogen auf 100 Gew.-Teile Isocyanatkomponente, ionische Gruppen tragenden Dihydroxy- und/oder Diaminoverbindungen und
   (e) 100 Gew.-Teilen eines organischen Diisocyanats oder einer Mischung organischer Diisocyanate.

2. Beschichtungs- und Zurichtmittel für Leder nach Anspruch 1, dadurch gekennzeichnet, daß die Viskosität der Polyurethandispersion im Bereich von 10 bis 5 000 mPa.s liegt.

3. Beschichtungs- und Zurichtmittel für Leder nach Ansprüchen 1 und 2, dadurch gekennzeichnet, daß die Polyesterpolyole aufgebaut sind aus aromatischen und/oder aliphatischen Dicarbonsäuren sowie Diolen.

4. Beschichtungs- und Zurichtmittel für Leder nach Ansprüchen 1 bis 3, dadurch gekennzeichnet, daß die Polyesterpolyole aufgebaut sind aus Adipinsäure und/ oder Isophthalsäure und Diethylenglykol, wobei die Hydroxylzahl der Polyesterpolyole kleiner als 200 und vorzugsweise 30 bis 100 ist und die Säurezahl des Esters kleiner als 12 und vorzugsweise kleiner als 6 ist.

5. Beschichtungs- und Zurichtmittel nach Ansprüchen 1 und 2, dadurch gekennzeichnet, daß das Triol oder Polyol aus Ringöffnungsprodukten von Soja- und/oder Leinölepoxiden mit Methanol, alkoxyliert mit 0 bis 10 Ethylenoxid- und/oder 0 bis 20 Propylenoxidgruppen pro Mol Ringöffnungsprodukt oder aus Rizinusöl, alkoxyliert mit 0 bis 10 Ethylenoxid-und/oder 0 bis 20 Propylenoxidgruppen pro Mol Rizinusöl besteht.

6. Beschichtungs- und Zurichtmittel für Leder nach Ansprüchen 1 und 2, dadurch gekennzeichnet, daß das Polyetherpolyol der Formel (I)

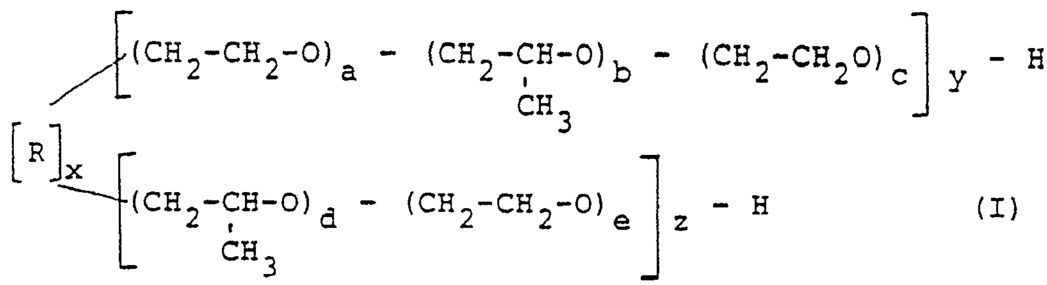

(I)

entspricht, in der

R für einen Glycerin-, Trimethylolpropan-, Trimethylolethan- oder Polyglycerinrest mit dem Polymerisationsgrad $x = 1$ bis 6 steht und die Indices $y = (x - z + 2)$, $z = 0$ bis 4, $a = 1$ bis 15, $b = 20$ bis 100, $c = 1$ bis 15, $d = 20$ bis 150 und $e = 1$ bis 15 bedeuten mit der Maßgabe, daß die Summen $(a + c + e) = 3$ bis 40, $(b + d) = 40$ bis 300 und $(c + e) = 1$ bis 15 bedeuten und y mindestens den Wert 1 besitzt.

**7.** Beschichtungs- und Zurichtmittel für Leder nach Ansprüchen 1 und 2, dadurch gekennzeichnet, daß ionische Gruppen tragende Dihydroxy- und/oder Diaminoverbindung eine Carboxylat-, Sulfonat- und/oder Ammoniumgruppe enthält und vorzugsweise Dimethylolpropionsäure ist.

**8.** Beschichtungs- und Zurichtmittel für Leder nach Ansprüchen 1 und 2, dadurch gekennzeichnet, daß das organische Diisocyanat aus der Gruppe der aliphatischen Diisocyanate ausgewählt ist.

**9.** Beschichtungs- und Zurichtmittel für Leder nach Ansprüchen 1, 2 und 8, dadurch gekennzeichnet, daß das organische Diisocyanat ausgewählt ist aus der aus Isophorondiisocyanat, 4,4-Methylen-bis-(cyclohexylisocyanat), Hexamethylen-1,6-diisocyanat und Dimerfettsäurediisocyanat bestehenden Gruppe.

**10.** Beschichtungs- und Zurichtmittel für Leder nach Ansprüchen 1, 2, 8 und 9, dadurch gekennzeichnet, daß das organische Diisocyanat Isophorondiisocyanat ist.

**11.** Verfahren zum Aufbringen von Beschichtungs- und Zurichtmitteln für Leder nach Ansprüchen 1 bis 7, dadurch gekennzeichnet, daß man die Polyurethandispersionen gegebenenfalls in wäßriger Verdünnung mittels Walzenauftrags-, Spritz-, Plüsch- oder Gießmaschinen auf das Leder aufbringt und anschließend trocknet sowie gut bügelt.

**12.** Verfahren zum Aufbringen von Beschichtungs- und Zurichtmitteln für Leder nach Anspruch 11, dadurch gekennzeichnet, daß man die Polyurethandispersionen in an sich bekannter Weise mit Zusätzen wie Polyacrylaten, kolloidalem Kasein, modifizierten Silikonen, wäßrigen Emulsionen natürlicher und/oder synthetischer Wachse bzw. Wachsester, Celluloseester und PUR-Emulsionen, Antischaummitteln und Pigmentzubereitungen abmischt.

**13.** Verwendung von Beschichtungs- und Zurichtmitteln für Leder nach Ansprüchen 1 bis 10 zum Aufbringen von Schlußstrichen und zum Zurichten von Leder und Flächengebilden auf der Basis von Lederaustauschstoffen.

## Claims

**1.** Coating and finishing compositions for leather based on aqueous polyurethane dispersions having a solids content of from 10 to 50% and a viscosity in the range from 10 to 50,000 mPa.s, characterized in that the polyurethane dispersion consists of

(a) 40 to 200 parts by weight, based on 100 parts by weight isocyanate component, of a polyester polyol,

(b) 6 to 60 parts by weight, based on 100 parts by weight isocyanate component, of triol or polyol containing at least 10 carbon atoms prepared by addition of $C_{1-8}$ monohydric alcohols onto epoxidized triglyceride oils, the addition products being reactable with $C_{2-4}$ alkylene oxides, or of a

castor oil alkoxylated with 0 to 50 ethylene oxide and/or 0 to 100 propylene oxide groups,
(c) 0 to 12 parts by weight, based on 100 parts by weight isocyanate component, of a polyether polyol,
(d) 5 to 35 parts by weight, based on 100 parts by weight isocyanate component, of dihydroxy and/or diamino compounds containing ionic groups and
(e) 100 parts by weight of an organic diisocyanate or a mixture of organic diisocyanates.

**2.** Coating and finishing compositions for leather as claimed in claim 1, characterized in that the polyurethane dispersion has a viscosity of from 10 to 5,000 mPa.s.

**3.** Coating and finishing compositions for leather as claimed in claims 1 and 2, characterized in that the polyester polyols are synthesized from aromatic and/or aliphatic dicarboxylic acids and diols.

**4.** Coating and finishing compositions for leather as claimed in claims 1 to 3, characterized in that the polyester polyols are synthesized from adipic acid and/or isophthalic acid and diethylene glycol, the hydroxyl value of the polyester polyols being below 200 and preferably from 30 to 100 and the acid value of the ester being below 12 and preferably, below 6.

**5.** Coating and finishing compositions as claimed in claims 1 and 2, characterized in that the triol or polyol consists of ring-opening products of soybean oil and/or linseed oil epoxides with methanol alkoxylated with 0 to 10 ethylene oxide groups and/or 0 to 20 propylene oxide groups per mol ring opening product or of castor oil alkoxylated with 0 to 10 ethylene oxide molecules and/or 0 to 20 propylene oxide molecules per mol castor oil.

**6.** Coating and finishing compositions for leather as claimed in claims 1 and 2, characterized in that the polyether polyol corresponds to the following formula

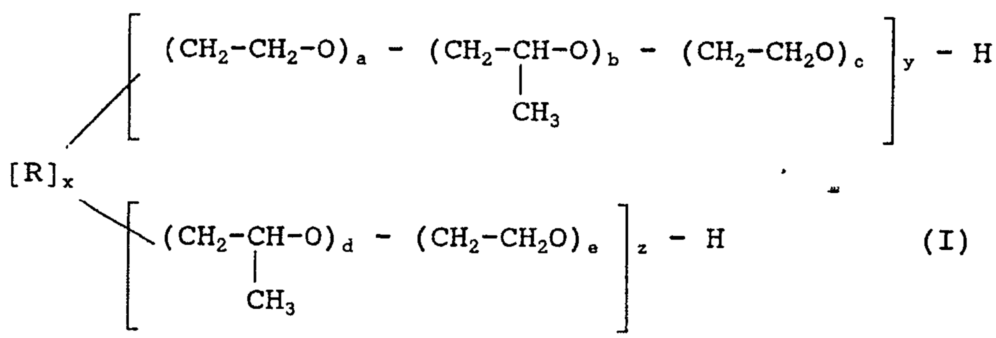

(I)

in which

R is a glycerol, trimethylol propane, trimethylol ethane or polyglycerol residue having a degree of polymerization x of from 1 to 6 and the indices y = (x - z + 2), z = 0 to 4, a = 1 to 15, b = 20 to 100, c = 1 to 15, d = 20 to 150 and e = 1 to 15, with the proviso that the sums (a + c + e) = 3 to 40, (b + d) = 40 to 300 and (c + e) = 1 to 15 and y has a value of at least 1.

**7.** Coating and finishing compositions for leather as claimed in claims 1 and 2, characterized in that the dihydroxy and/or diamino compound bearing ionic groups contains a carboxylate, sulfonate and/or ammonium group and is preferably dimethylol propionic acid.

**8.** Coating and finishing compositions for leather as claimed in claims 1 and 2, characterized in that the organic diisocyanate is selected from the group of aliphatic diisocyanates.

**9.** Coating and finishing compositions for leather as claimed in claims 1, 2 and 8, characterized in that the organic diisocyanate is selected from the group consisting of isophorone diisocyanate, 4,4-methylene-bis-(cyclohexylisocyanate), hexamethylene-1,6-diisocyanate and dimer fatty acid diisocyanate.

**10.** Coating and finishing compositions for leather as claimed in claims 1, 2, 8 and 9, characterized in that the organic diisocyanate is isophorone diisocyanate.

**11.** A process for applying coating and finishing compositions for leather as claimed in claims 1 to 7, characterized in that the polyurethane dispersions, optionally diluted in water, are applied to the leather by roll coating, spray coating, kiss-roll coating or casting, followed by drying and ironing.

**12.** A process for applying coating and finishing compositions for leather as claimed in claim 11, characterized in that the polyurethane dispersions are mixed in known manner with additives such as polyacrylates, colloidal casein, modified silicones, aqueous emulsions of natural and/or synthetic waxes or wax esters, cellulose esters and PUR emulsions, foam inhibitors and pigment preparations.

**13.** The use of the coating and finishing compositions for leather claimed in claims 1 to 10 for applying top coats and for finishing leather and sheet-form materials based on leather substitutes.

**Revendications**

**1.** Agents de revêtement et d'apprêt pour le cuir, à base de dispersions aqueuses de polyuréthanne ayant une teneur en matière sèche de 10 à 50% et une viscosité dans la plage de 10 à 50.000 mPa.s, caractérisés en ce que la dispersion de polyuréthanne est constituée :

a) de 40 à 200 parties en poids, par rapport à 100 parties en poids de composant isocyanate, d'un polyester-polyol,

b) de 6 à 60 parties en poids, par rapport à 100 parties en poids de composant isocyanate, d'un triol ou polyol comportant au moins 10 atomes de carbone, préparé par addition de monoalcools ayant de 1 à 8 atomes de carbone, sur des huiles triglycéridiques époxydées, les produits d'addition pouvant être mis en réaction avec des oxydes d'alkylène ayant de 2 à 4 atomes de carbone, ou d'une huile de ricin alcoxylée comportant de 0 à 50 groupes oxyde d'éthylène et/ou de 0 à 100 groupes oxyde de propylène,

c) de 0 à 12 parties en poids, par rapport à 100 parties en poids de composant isocyanate, d'un polyéther-polyol,

d) de 5 à 35 parties en poids, par rapport à 100 parties en poids de composant isocyanate, de composés dihydroxylés et/ou diaminés portant des groupes ioniques, et

e) 100 parties en poids d'un diisocyanate organique ou d'un mélange de diisocyanates organiques.

**2.** Agents de revêtement et d'apprêt pour le cuir, selon la revendication 1, caractérisés en ce que la viscosité de la dispersion de polyuréthanne se situe dans la plage de 10 à 5000 mPa.s.

**3.** Agents de revêtement et d'apprêt pour le cuir selon les revendications 1 et 2, caractérisé en ce que les polyesterpolyols sont formés à partir d'acides dicarboxyliques aromatiques et/ou aliphatiques et de diols.

**4.** Agents de revêtement et d'apprêt pour le cuir selon l'une quelconque des revendications 1 à 3, caractérisés en ce que les polyesterpolyols sont formés à partir d'acide adipique et/ou d'acide isophtalique et de diéthylèneglycol, l'indice d'hydroxy des polyesterpolyols étant inférieur à 200 et de préférence, allant de 30 à 100, et l'indice d'acide de l'ester étant inférieur à 12 et de préférence, inférieur à 6.

**5.** Agents de revêtement et d'apprêt pour le cuir, selon les revendications 1 ou 2, caractérisés en ce que le triol ou polyol est constitué de produits d'ouverture de cycle d'époxydes d'huile de zoja ou de lin avec le méthanol, alcoxylés avec de 0 à 10 groupes oxyde d'éthylène et/ou de 0 à 20 groupes oxyde de propylène par mole de produit d'ouverture de cycle, ou d'une huile de ricin alcoxylée avec de 0 à 10 groupes oxyde d'éthylène et/ou de 0 à 20 groupes oxyde de propylène par mole d'huile de ricin.

**6.** Agents de revêtement et d'apprêt pour le cuir, selon les revendications 1 et 2, caractérisés en ce que le polyéther-polyol correspond à la formule (I)

$$[\ (CH_2\text{-}CH_2\text{-}O)_a - (CH_2\text{-}\underset{\displaystyle CH_3}{\underset{|}{CH}}\text{-}O)_b - (CH_2\text{-}CH_2O)_c\ ]_y\ \text{-H}$$

/

$[R]_x$

\

$$[\ (CH_2\text{-}\underset{\displaystyle CH_3}{\underset{|}{CH}}\text{-}O)_d - (CH_2\text{-}CH_2\text{-}O)_e\ ]_z - H \qquad (I)$$

dans laquelle :

R représente un radical glycérol, triméthylolpropane, triméthyloléthane, ou polyglycérol, ayant un degré de polymérisation x = 1 à 6, et les indices représentent y = (x-z+2), z = 0 à 4, a = 1 à 15, b = 20 à 100, c = 1 à 15, d = 20 à 150 et e = 1 à 15, étant entendu que les sommes (a + c + e) = 3 à 40, (b + d) = 40 à 300 et (c + e) = 1 à 15 et y a au moins la valeur 1.

**7.** Agents de revêtement et d'apprêt pour le cuir selon les revendications 1 et 2, caractérisés en ce que le composé dihydroxylé et/ou diaminé portant des groupes ioniques contient un groupe carboxylate, sulfonate et/ou ammonium et est, de préférence, l'acide diméthylolpropionique.

**8.** Agents de revêtement et d'apprêt pour le cuir, selon les revendications 1 et 2, caractérisés en ce que le diisocyanate organique est choisi dans le groupe des diisocyanates aliphatiques.

**9.** Agents de revêtement et d'apprêt pour le cuirselon les revendications 1, 2 et 8, caractérisés en ce que le diisocyanate organique est choisi dans le groupe composé de l'isophorone-diisocyanate, du 4,4-méthylène-bis (cyclohexylisocyanate), de l'hexaméthylène -1,6-diisocyanate et d'un diisocyanate d'acide gras dimère.

**10.** Agents de revêtement et d'apprêt pour le cuir selon les revendications 1, 2, 8 et 9, caractérisés en ce que la isocyanate organique est l'isophorone-diisocyanate.

**11.** Procédé pour l'application d'agents de revêtement et d'apprêt pour le cuir selon l'une quelconque des revendications 1 à 7, caractérisé en ce que l'on applique sur le cuir les dispersions de polyuréthanne, éventuellement en dilution aqueuse, au moyen de machines d'application au rouleau, de pulvérisation, d'pplication au tampon de peluche ou d'aspersion, et ensuite on le sèche et on le repasse bien.

**12.** Procédé pour l'application d'agents de revêtement et d'apprêt pour le cuir selon la revendication 11, caractérisé en ce que l'on mélange, d'une façon connue en soi, les dispersions de polyuréthanne, avec des additifs, tels que des polyacrylates, la caséine colloïdale, des silicones modifiées, des émulsions aqueuses de cires ou esters de cires naturelles ou synthétiques, des esters de cellulose et des émulsions de PUR, des agents antimousse et des compositions de pigments.

**13.** Utilisation d'agents de revêtement et d'apprêt pour le cuir selon les revendications 1 à 10, pour l'application de couches finales et l'apprêtage du cuir et d'articles plats à base de matières de remplacement du cuir.